# EUROPÄISCHE PATENTANMELDUNG

(11) **EP 1 279 869 A2**
(43) Veröffentlichungstag der Anmeldung: **29.01.2003**
(21) Anmeldenummer: 02016143.6
(22) Anmeldetag: 20.07.2002
(51) Int. Cl.: F16H 61/28

(54) **Stellvorrichtung für ein automatisiertes Stufengetriebe eines Kraftfahrzeuges**

(30) Priorität: 25.07.2001 DE 10136232
(71) Anmelder: ZF FRIEDRICHSHAFEN Aktiengesellschaft, 88038 Friedrichshafen (DE)
(72) Erfinder: Gumpoltsberger, Gerhard, 88045 Friedrichshafen (DE); Baasch, Detlef, 88048 Friedrichshafen (DE); Dreibholz, Ralf, 88074 Meckenbeuren (DE)

(57) **Zusammenfassung**

Es wird eine Stellvorrichtung (1) für ein automatisiertes Stufengetriebe (2) eines Kraftfahrzeuges vorgeschlagen, mit einer durch einen Stellantrieb (5) betätigbaren Schaltwalze (3), die wenigstens eine Führung (9, 10) aufweist, in der wenigstens ein mit einem Stellglied des Stufengetriebes (2) verbundenes Führungselement (6, 7) geführt ist, und mit wenigstens einer weiteren separaten Schaltwalze (4). Die Schaltwalzen (3, 4) sind kinematisch miteinander gekoppelt.

## Beschreibung

Die Erfindung betrifft eine Stellvorrichtung für ein automatisiertes Stufengetriebe eines Kraftfahrzeuges nach der im Oberbegriff des Patentanspruches 1 näher definierten Art. Als Stufengetriebe werden nachfolgend sowohl automatisierte Schaltgetriebe, wie beispielsweise nicht lastschaltbare, automatisierte Handschaltgetriebe, als auch automatisierte Stufengetriebe, wie beispielsweise automatisiert lastschaltbare Doppelkupplungsgetriebe, verstanden.

Stellvorrichtungen mit Schaltwalzen werden bereits seit langem auf dem Gebiet der Motorräder verwendet, da hier mittels Schaltwalzen eine besonders günstige Kopplung zwischen einer Kraftbetätigung und einer implementierten Schaltlogik vorliegt. Zum Ein- und Auslegen von Gängen des Getriebes wird üblicherweise eine Schaltwalze verwendet, die eine Umfangsspur aufweist, in der ein axial verschiebliches Führungselement geführt ist, und die durch einen Fußhebel mit zugeordneter Klinkeneinrichtung in eine definierte Drehbewegung versetzt werden kann.

Bekannte Schaltwalzen, die Führungen in der Regel in Form von Nuten aufweisen, in denen Stifte laufen, die auf den entsprechenden Schaltstangen bzw. Schaltgabeln des Getriebes sitzen und diese bewegen, werden in der Praxis üblicherweise dort verwendet, wo man eine einfache Betätigung beim Schalten haben möchte, wie z.B. bei einem Motorrad, bei dem nur ein sequentielles Schalten in den nächsten Gang vorgenommen wird.

Da die Möglichkeiten der Realisierung einer Logik zum Schalten von Gängen durch Aufbringen von entsprechenden Führungen auf der Schaltwalze sowie die Übertragung der Schaltkraft von einer Energiequelle auf die Schaltstelle limitiert sind, fanden Stellvorrichtungen mit Schaltwalzen bei Vierradfahrzeugen bisher hauptsächlich im Rennsport Verwendung.

Da Schaltwalzen als Teil von Stellvorrichtungen den Vorteil haben, daß sie auf einfache Weise elektromotorisch angetrieben werden können und im Vergleich zu hydraulischen Schaltvorrichtungen mit den hierbei notwendigen Hydraulikkreisläufen einen beträchtlich geringeren Aufwand erfordern, sind in neuerer Zeit Anstrengungen feststellbar, das Prinzip einer Stellvorrichtung mit einer Schaltwalze insbesondere auf Personenkraftwagen mit einem automatisierten Schaltgetriebe zu übertragen. Eine rein sequentielle Schaltbarkeit wie bei einem Motorrad ist jedoch bei einem Kraftwagen aufgrund der sich daraus zwangsläufig ergebenden Komforteinbußen für den Fahrer nicht durchsetzbar. Um die Schaltwalzen-Technologie auch bei einem automatisierten Schaltgetriebe anwenden zu können, sind an den Schaltwalzen entsprechende Modifikationen vorzunehmen.

Die DE 195 16 651 A1 beschreibt ein Schaltgetriebe, insbesondere für Kraftfahrzeuge, bei dem die einzelnen Schaltstufen durch Verdrehen einer Schaltwalze sequentiell eingelegt werden. Die Schaltgabeln des Schaltgetriebes werden auf der Schaltwalze geführt, wodurch die Schaltstange entfällt. Durch Entkoppeln der Schaltgabeln von der Zwangssteuerung der Schaltwalze kann die Zwangsabfolge beim Einlegen der einzelnen Gänge aufgehoben werden.

Aus der DE 199 24 335 A1 ist des weiteren eine Stellvorrichtung für ein Stufengetriebe eines Kaftfahrzeuges bekannt, welche eine Schaltwalze mit einer Umfangsspur aufweist. In der Umfangsspur sind wenigstens zwei axial verschiebliche Führungselemente geführt, die miteinander derart gekoppelt sind, daß eine Schaltzacke in der Umfangsspur je nach Drehposition der Schaltwalze zum axialen Bewegen von zwei Stellgliedern verwendbar ist. Diese Schaltwalze ist mit wenigstens einer weiteren Schaltwalze kombinierbar, wobei von dem Gedanken ausgegangen wird, durch zwei unabhängig voneinander drehbare Schaltwalzen auch ohne Entkoppelung der axialen Führung zumindest einige Gangwechsel unter Überspringen von einem oder mehreren Gängen in kürzestmöglicher Zeit durchzuführen, und ferner einen Gangwechsel mit überschneidender Betätigung von zwei Schaltkupplungen durchzuführen, wobei ein Zugkrafteinbruch während des Schaltvorganges minimiert wird. Der konstruktive Aufwand zur Realisierung dieser Lösung ist jedoch außerordentlich hoch.

Allgemein problematisch ist bei Schaltwalzen die Betätigung von Getrieben mit vielen Gängen, von Getrieben mit einem großen Schaltkraftbedarf und insbesondere eine Kombination von beiden, wie sie z.B. bei Gruppengetrieben gegeben ist.

Um das Moment, das an der Schaltwalze anliegt, in eine Schaltkraft umzuwandeln, sind bekanntlich zwei geometrische Größen von Bedeutung, nämlich der Schaltwalzendurchmesser und der Winkel der Umfangsspur bzw. -nut. Um die Betätigungskraft gegenüber dem anliegenden Moment zu vergrößern, müßte der Durchmesser der Schaltwalze bzw. der Nutwinkel verkleinert werden.

Andererseits ist eher eine Vergrößerung des Schaltwalzendurchmessers wünschenswert, um die gesamte Logik in Form von Nuten auf deren Oberfläche unterbringen zu können. Beispielsweise benötigt man für ein Getriebe mit mehr als fünf Gängen mindestens vier Nuten, wenn für vier zu bedienende Schaltpakete vier Schaltgabeln jeweils in einer Nut geführt werden sollen. Gegen eine Vergrößerung der Schaltwalze spricht jedoch nicht nur der begrenzte Bauraum, sondern auch die erhöhte Pressung auf die Nut und - wie oben beschrieben - die größere erforderliche Kraft zum Bewegen der Schaltwalze.

Es ist somit für moderne automatisierte Stufengetriebe mit mehr als fünf Gängen schwierig, mit einem Aktuator eine Schaltwalze alleine anzusteuern, wobei auf der Oberflächenabwicklung dieser einen Schaltwalze meist nicht mehr genügend Platz für eine optimale Gestaltung der Führungen vorhanden ist.

Es ist Aufgabe der vorliegenden Erfindung, eine Stellvorrichtung für ein automatisiertes Stufengetriebe eines Kraftfahrzeuges mit wenigstens einer Schaltwalze zu schaffen, mit der den Forderungen nach einer für die Schaltlogik optimalen Gestaltung der Führungen auf der Schaltwalzenoberfläche, nach einer möglichst geringen Betätigungskraft sowie einem geringen Bauraumbedarf weitestgehend entsprochen wird.

Diese Aufgabe wird erfindungsgemäß mit einer Stellvorrichtung nach den Merkmalen des Patentanspruches 1 gelöst.

Bei einer Stellvorrichtung für ein automatisiertes Stufengetriebe eines Kraftfahrzeuges mit einer ersten Schaltwalze und wenigstens einer weiteren separaten Schaltwalze, die kinematisch miteinander gekoppelt sind, ergibt sich der Vorteil, daß die Führungen auf mindestens zwei separate Schaltwalzen aufgeteilt werden können, womit die Schaltwalzen entsprechend klein dimensioniert werden können und ausreichend Platz für eine optimale Gestaltung der Führungen auf der Oberflächenabwicklung der Schaltwalzen zur Verfügung steht. Als Stufengetriebe werden hier sowohl automatisierte, nicht lastschaltbare Handgetriebe als auch automatisierte, lastschaltbare Stufengetriebe, wie beispielsweise Doppelkupplungsgetriebe, verstanden.

Beispielsweise kann die Anordnung von zwei kinematisch miteinander gekoppelten Schaltwalzen dazu genutzt werden, eine Schaltwalze einem Hauptgetriebe und die weitere Schaltwalze einer Gruppenschaltung bzw. einem Rangegetriebe zuzuordnen, so daß eine sehr große Anzahl von Gängen mittels zweier verhältnismäßig kleiner Schaltwalzen geschaltet werden kann.

Auch wird die gesamte benötigte Betätigungskraft deutlich reduziert. Entsprechend der niedrigeren benötigten Energie zur Übertragung der Schaltkraft wird bevorzugt nur eine einzige Kraftquelle zum Antrieb der Schaltwalzen vorgesehen, wobei diese Kraftquelle durch einen manuell betätigten oder mit elektrischen, pneumatischen oder hydraulischen Einrichtungen versehenen Stellantrieb realisiert sein kann.

Der Stellantrieb kann mit den Schaltwalzen über eine gleichmäßige Übersetzung, beispielsweise in Form eines Riementriebs oder einer Verzahnung, oder aber auch durch eine ungleichmäßige Übersetzung bzw. ein ungleichmäßig übersetzendes Getriebe verbunden sein.

Die kinematische Kopplung zwischen den Schaltwalzen kann ebenfalls durch ein gleichmäßig oder ein ungleichmäßig übersetzendes Getriebe realisiert sein. Als gleichmäßig übersetzendes Getriebe kommt jegliche Art von Übersetzungseinrichtung in Betracht, bei der die Übersetzung während einer Umdrehung der Schaltwalzen konstant ist. Eine solche feste Übersetzungsstufe kann beispielsweise eine Zahnradübersetzung sein oder im einfachsten Fall auch eine feststehende Welle zwischen den Schaltwalzen, wobei dann die Übersetzung 1:1 beträgt.

Ein ungleichmäßig übersetzendes Getriebe als kinematische Kopplung zwischen den Schaltwalzen kann jegliche Übersetzungseinrichtung sein, bei der die Übersetzung variabel ist, d.h. mit der Walzendrehung variiert, wobei jedem Drehwinkel bzw. Drehwinkelbereich der Schaltwalzen eine definierte Übersetzung zugeordnet ist.

Bei einer solchen variablen kinematischen Kopplung kann erreicht werden, daß zunächst lediglich eine erste Schaltwalze verstellt wird, während die zweite Schaltwalze ihre Stellung für einen gewissen Zeitraum behält und steht. Die Übersetzung der kinematischen Kopplung ist dann für einen definierten Zeitraum unendlich.

Die kinematische Kopplung der Schaltwalzen mit ungleichmäßiger Übersetzung ist insbesondere bei Getrieben mit sechs und mehr Gängen ohne Gruppenstruktur von Vorteil, wobei als ungleichmäßig übersetzendes Getriebe ein entsprechend gestaltetes Schrittschaltwerk, eine Mitnahmevorrichtung, ein Kurvengetriebe oder ein Riementrieb mit exzentrisch laufendem Rad dienen kann.

Weitere Vorteile und vorteilhafte Ausgestaltungen des Gegenstandes nach der Erfindung sind der Beschreibung, der Zeichnung und den Patentansprüchen entnehmbar.

Zwei Ausführungsbeispiele einer erfindungsgemäßen Stellvorrichtung sind in der Zeichnung dargestellt und werden in der folgenden Beschreibung näher erläutert.
Es zeigt:
- Fig. 1: eine schematische Darstellung einer erfindungsgemäßen Stellvorrichtung für ein automatisiertes 4x2-Gruppengetriebe mit zwei kinematisch miteinander gekoppelten Schaltwalzen zen und einem linearen Aufbau bezüglich eines Stellantriebes und
- Fig. 2: eine gegenüber der Fig. 1 vereinfachte schematische Darstellung einer erfindungsgemäßen Stellvorrichtung mit zwei kinematisch miteinander gekoppelten Schaltwalzen und einem parallelen Aufbau bezüglich eines Stellantriebes.

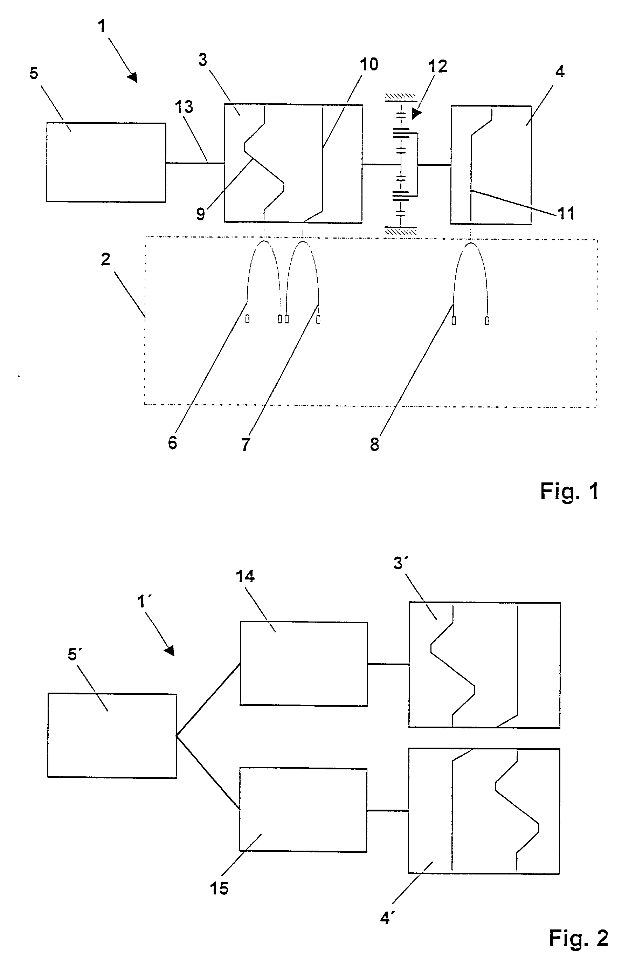

In der Fig. 1 ist eine erfindungsgemäße Stellvorrichtung 1 für ein nur symbolisch angedeutetes automatisiertes 4x2-Gruppengetriebe 2 eines Kraftfahrzeuges dargestellt. Die Stellvorrichtung 1 umfaßt zwei Schaltwalzen 3 bzw. 4, welche beide eine wenigstens annähernd zylindrische Form haben und kinematisch miteinander gekoppelt sind. Die Schaltwalzen 3 und 4 werden von einem Stellantrieb 5 angetrieben, welcher vorliegend als ein Elektromotor ausgeführt ist.

Bei dem gezeigten Schaltgetriebe 2 handelt es sich um ein Mehr-Gruppengetriebe, welches ein Hauptgetriebe mit vier Gängen und eine Rangegruppe aufweist, mittels der die Gangfolge des Hauptgetriebes auf acht Gänge verdoppelt werden kann. Die Schaltwalzen 3 und 4 sind dabei so vorgesehen, daß die Schaltwalze 3 dem Hauptgetriebe zugeordnet ist, während die Schaltwalze 4 zur Schaltung der Rangegruppe dient. Die Schaltung des Hauptgetriebes erfolgt über zwei Schaltgabeln 6, 7 und die Schaltung der Rangegruppe über eine Schaltgabel 8. Die Schaltgabeln 6, 7 und 8 sind einerseits mit einem entsprechenden Stellglied des Schaltgetriebes 2 gekoppelt und andererseits in einer zugeordneten Führung 9, 10 bzw. 11 auf der Schaltwalze 3 bzw. der Schaltwalze 4 geführt.

Die Führungselemente darstellenden Schaltgabeln 6, 7 und 8 werden bei einer Drehung der Schaltwalzen 3 bzw. 4 in den vorliegend als nutenartige Umfangsspuren auf der Oberflächenabwicklung der Schaltwalzen 3, 4 ausgebildeten Führungen 9, 10, 11 axial verschoben und bewirken damit eine Verstellung der Stellglieder bzw. Schaltpakete des Schaltgetriebes 2, welche in herkömmlicher Weise bei dem Schaltgetriebe 2 ausgebildet sein können und daher vorliegend nicht weiter erläutert werden.

Es versteht sich, daß die Führungen auf der Schaltwalze in anderen Ausführungen auch eine andere Formgebung aufweisen können, wobei sie nicht zwangsweise nutartig ausgebildet sein müssen, sondern in einfachen Fällen beispielsweise auch lochartig sein können. Auch können gegebenenfalls mehrere Schaltgabeln in einer Umfangsspur geführt sein.

Die kinematische Kopplung der Schaltwalzen 3 und 4 erfolgt im vorliegenden Fall durch eine gleichmäßige Übersetzung 12. Da bei dem gezeigten 4x2-Gruppengetriebe die Schaltwalze 3 des Hauptgetriebes vier mal so schnell rotieren soll wie die Schaltwalze 4 der Rangegruppe bzw. des Rangegetriebes, ist die Übersetzung 12 hier durch ein gleichmäßig übersetzendes Planetengetriebe einfacher Bauart mit der Übersetzung i = 4 realisiert.

Bei der Ausführung nach Fig. 1 ist der beide Schaltwalzen 3, 4 in einer linearen Anordnung antreibende Stellantrieb 5 mit der ersten Schaltwalze 3 über eine eine Übersetzung 1:1 herstellende Welle 13 verbunden.

Die Fig. 2 zeigt eine gegenüber der Ausführung nach Fig. 1 abweichende Stellvorrichtung 1', bei der zwei Schaltwalzen 3', 4' bezüglich eines einzigen Stellantriebes 5' parallel angeordnet sind, wobei zwischen den Schaltwalzen 3', 4' und dem Stellantrieb 5' jeweils eine kinematische Kopplung 14 bzw. 15 vorgesehen ist. Bei einer Ausführung gemäß Fig. 2 kann eine kürzere Baulänge der gesamten Anordnung erreicht werden, wobei die dann nebeneinander liegenden Schaltwalzen 3', 4' ebenfalls kinematisch miteinander gekoppelt sind.

### Bezugszeichen

- 1, 1': Stellvorrichtung
- 2: Schaltgetriebe, 4x2-Mehr-Gruppengetriebe
- 3, 3': Schaltwalze
- 4, 4': Schaltwalze
- 5, 5': Stellantrieb
- 6: Führungselement, Schaltgabel
- 7: Führungselement, Schaltgabel
- 8: Führungselement, Schaltgabel
- 9: Führung, Umfangsspur
- 10: Führung, Umfangsspur
- 11: Führung, Umfangsspur
- 12: Übersetzung, Planetengetriebe
- 13: Welle
- 14: kinematische Kopplung
- 15: kinematische Kopplung

## Patentansprüche

1. Stellvorrichtung für ein automatisiertes Stufengetriebe (2) eines Kraftfahrzeuges, mit einer durch einen Stellantrieb (5; 5') betätigbaren Schaltwalze (3; 3'), die wenigstens eine Führung (9, 10) aufweist, in der wenigstens ein mit einem Stellglied des Stufengetriebes (2) verbundenes Führungselement (6, 7) geführt ist, und mit wenigstens einer weiteren separaten Schaltwalze (4; 4'), **dadurch gekennzeichnet, daß** die Schaltwalzen (3, 4; 3', 4') kinematisch miteinander gekoppelt sind.

2. Stellvorrichtung nach Anspruch 1, **dadurch gekennzeichnet, daß** die Schaltwalzen (3, 4; 3', 4') von einem einzigen Stellantrieb (5; 5') angetrieben werden.

3. Stellvorrichtung nach Anspruch 1 oder 2, **dadurch gekennzeichnet, daß** die Schaltwalzen (3, 4; 3', 4') mit einem Stellantrieb (5; 5') über eine gleichmäßige oder ungleichmäßige Übersetzung (13; 14, 15) verbunden sind.

4. Stellvorrichtung nach einem der Ansprüche 1 bis 3, **dadurch gekennzeichnet, daß** die Schaltwalzen (3, 4; 3', 4') über eine konstante Übersetzung (12) miteinander gekoppelt sind.

5. Stellvorrichtung nach einem der Ansprüche 1 bis 3, **dadurch gekennzeichnet, daß** die Schaltwalzen (3, 4; 3', 4') über eine mit der Walzendrehung variierende Übersetzung miteinander gekoppelt sind.

6. Stellvorrichtung nach Anspruch 5, **dadurch gekennzeichnet, daß** die Übersetzung für einen definierten Bereich unendlich ist.

7. Stellvorrichtung nach einem der Ansprüche 1 bis 6, **dadurch gekennzeichnet, daß** die Führung (9, 10, 11) als eine Umfangsspur ausgebildet ist.

8. Stellvorrichtung nach einem der Ansprüche 1 bis 7, **dadurch gekennzeichnet, daß** das Führungselement (6, 7, 8) eine Schaltgabel darstellt.

9. Stellvorrichtung nach einem der Ansprüche 1 bis 8, **dadurch gekennzeichnet, daß** jeweils eine Schaltwalze (3, 4; 3', 4') einer Getriebegruppe eines Mehr-Gruppengetriebes (2) zugeordnet ist.

10. Stellvorrichtung nach einem der Ansprüche 1 bis 8, **dadurch gekennzeichnet, daß** jeweils eine Schaltwalze einen Getriebeteil (gerade/ungerade Gänge) eines Doppelkupplungsgetriebes zugeordnet ist.
